# EUROPÄISCHE PATENTSCHRIFT

(11) **EP 4 596 077 B1**
(45) Veröffentlichungstag und Bekanntmachung des Hinweises auf die Patenterteilung: **30.09.2026**
(21) Anmeldenummer: 24154666.2
(22) Anmeldetag: 30.01.2024
(51) Int. Cl.: B01D 21/00, B01D 17/02, B01D 21/02, B01D 21/24, B01D 21/30, E03F 1/00

(54) **HYDRODYNAMISCHER ABSCHEIDER UND BAUSATZ HIERFÜR**
HYDRODYNAMIC SEPARATOR AND CONSTRUCTION KIT THEREFOR
SÉPARATEUR HYDRODYNAMIQUE ET KIT ASSOCIÉ

(43) Veröffentlichungstag der Anmeldung: 06.08.2025
(73) Patentinhaber: H2O technologie UG, 73333 Giengen (DE)
(72) Erfinder: Mangold, Nicolai, 73333 Giengen (DE)
(74) Vertreter: Pa-Munk

(56) Entgegenhaltungen:
- WO-A1-00/62888
- WO-A1-2005/028068
- US-B1- 6 780 310

## Beschreibung

Die Erfindung betrifft einen hydrodynamischen Abscheider gemäß dem Oberbegriff des Anspruchs 15, sowie einen Bausatz zum Aufbau eines solchen hydrodynamischen Abscheiders gemäß dem Oberbegriff des Anspruchs 1.

Zur Klärung von Abwässern, Niederschlagswasser oder allgemein Fluiden mittels Sedimentation sind verschiedene Vorrichtungen bekannt. So gibt es beispielsweise Klärbecken, in denen die zu klärende Flüssigkeit so lange stehen gelassen wird, bis sich enthaltene Festkörper am Boden des Beckens absetzen. Nachteilig sind die hierfür nötigen großen Dimensionen und langen Zeiträume, über die die Flüssigkeit in Ruhe belassen werden muss.

Weiterhin bekannt sind Lamellenschrägklärer, die jedoch einen verhältnismäßig komplexen Aufbau und eine kontinuierliche Strömungsgeschwindigkeit benötigen, mit der sie von den zu klärenden Abwässern durchströmt werden.

Dem gegenüber haben hydrodynamische Abscheider der gattungsgemäßen Art einen relativ einfachen Aufbau, bestehend aus einem zylinderförmigen Topf bzw. Tank, in den radialseitigen Zulauf und Ablauf einmünden, wobei am Zulauf ein Strömungsrichter beispielsweise in Form eines Rohrkrümmers vorgesehen ist, mit dem die Strömung des einlaufenden Abwassers in eine tangential zur Innenwand des Topfes verlaufende Richtung umgerichtet wird. Durch diese tangentiale Strömung, die sich im weiteren Verlauf schwerkraftbedingt nach unten hin verlagert und somit spiralförmig entlang der Innenwand nach unten hin erstreckt, bis sie dort in einem weiter innen gelegenen Bereich wieder aufsteigt und dann am Ablauf wieder austritt, ergibt sich eine relativ lange Verweilzeit des zu klärenden Abwassers im hydrodynamischen Abscheider, während der sich Feststoffe absetzen können. Bekannt ist dies unter dem Schlagwort "Teetasseneffekt".

Instruktiv zu lesen hierzu ist die internationale Patentanmeldung WO2007/137212 A2, welche einen solchen hydrodynamischen Abscheider betrifft. Dort ist auch bereits vorgeschlagen worden, den hydrodynamischen Abscheider mit einem Bypass zu versehen, der im Falle einer zu starken bzw. mengenmäßig zu schnellen Füllung des hydrodynamischen Abscheiders einen Art Überlauf bildet, also eine Kurzschlussleitung, die den Zulauf mit dem Ablauf verbindet, sobald der Topf des hydrodynamischen Abscheiders einen Füllstand erreicht, bei dem seine Aufnahmefähigkeit erschöpft ist. Es wird dann also die ungeklärte Durchleitung von überschüssigem Abwasser, wie es zum Beispiel bei Starkregenereignissen auftreten kann, in Kauf genommen, um im Gegenzug die bereits abgesetzten Schwebstoffe im Tank nicht erneut aufzuwirbeln.

Die internationale Patentanmeldung WO 00/62888 A1 offenbart einen hydrodynamischen Abscheider bei dem oberhalb des Abscheiderkessels eine durch eine senkrechte Wand unterteilte Kammer vorgesehen ist, in die eine Flüssigkeit eingeleitet wird, die auftreibendes Material und sich absetzende Feststoffe enthalten kann. Die senkrechte Wand, welche die Kammer unterteilt, hat einen Durchlass, der mit einem Schieber versehen ist, welcher über einen Schwimmer betätigt wird, so dass der Durchlass nur dann offen steht, wenn auf der Flüssigkeitsstand auf der Einlassseite höher als der Durchlass ist. Dadurch soll sichergestellt werden, dass auftreibendes Material nicht in den Abscheiderkessel gelangt, sondern auf der Einlassseite der Kammer verbleibt und dort abgeschöpft werden kann.

In der US-Patentschrift US 6,780,310 B1 wird ein hydrodynamischer Abscheider offenbart, bei dem die tankinnenseitige Öffnung des in den Tank führenden Einlassrohrs mit einer Klappe versehen ist. Die Stellung der Klappe kann über einen Hebel eingestellt werden und damit die Größe der Durchlassfläche, durch die die einlaufende Flüssigkeit in den Tank strömen kann.

Die internationale Patentanmeldung WO 2005/028068 A1 betrifft einen hydrodynamischen Abscheider mit einem Tank, in den ein tangentialer Einlauf mündet. Die einströmende Flüssigkeit wird gegen ein Wehr 24 in Form eines senkrechten Blechs geleitet, von dem sie aus ihrer tangentialen Bahn nach innen abgelenkt wird und durch eine Einlassöffnung ins Tankinnere gelangt. Die Einlassöffnung hat einen unterseitigen Verlauf, der sich umso weiter nach unten hin erstreckt, je weiter weg der jeweilige Punkt von dem tangentialen Einlass ist. Dadurch wird bei geringem Flüssigkeitsvolumen nur ein kleiner Bereich der Einlassöffnung für die Einlassströmung freigegeben, bei einer höheren Flüssigkeitsströmung dagegen ein größerer Bereich der Einlassöffnung, Die durchströmte Fläche der Einlassöffnung ist also bei höherem Flüssigkeitsstand größer als bei niedrigerem Flüssigkeitsstand.

Hiervon ausgehend liegt der vorliegenden Erfindung die Aufgabe zu Grunde, einen hydrodynamischen Abscheider der gattungsgemäßen Art derart weiterzubilden, dass unter unterschiedlichen Einsatzbedingungen ein optimales Sedimentationsergebnis erzielt wird.

Diese Aufgabe wird hinsichtlich des hydrodynamischen Abscheiders mit den Merkmalen des Anspruchs 15 gelöst, hinsichtlich des Bausatzes zum Aufbau des hydrodynamischen Abscheiders mit den Merkmalen des Anspruchs 1.

Erfindungsgemäß vorgeschlagen wird ein Bausatz zum Aufbau eines hydrodynamischen Abscheiders aus einem zylindrischen Tank in Form eines stehenden Zylinders mit einer zylinderförmigen Seitenwand, die von einer Anzahl radialer Zulauföffnungen und einer weiteren Anzahl radialer Auslauföffnungen durchdrungen wird. Der Bausatz weist dabei für jede der Zulauföffnungen einen Strömungsrichter zum innenseitigen Anbau an die Zulauföffnung auf, wobei der Strömungsrichter die durch die Zulauföffnung in den Tank einlaufende Flüssigkeit zu einer in Richtung entlang der Innenoberfläche der Seitenwand überwiegend tangential in den Tank eintretenden Einlassströmung umrichtet, und zeichnet sich dadurch aus, dass der Bausatz ferner eine Strömungseinstelleinrichtung umfasst, welche die Strömungsgeschwindigkeit der Einlassströmung unabhängig vom Volumenstrom der einlaufenden Flüssigkeit konstant hält oder zumindest so einstellt, dass im Ansprechen auf Änderungen im Volumenstrom der einlaufenden Flüssigkeit auftretende Änderungen der Strömungsgeschwindigkeit der Einlassströmung gedämpft werden. Der erfindungsgemäße hydrodynamische Abscheider weist dementsprechend einen zylindrischen Tank in Form eines stehenden Zylinders mit einer zylinderförmigen Seitenwand auf, die von einer Anzahl radialer Zulauföffnungen und einer weiteren Anzahl radialer Auslauföffnungen durchdrungen ist und mit einem Bausatz der erfindungsgemäßen Art ausgestattet ist.

Die Strömungseinstelleinrichtung umfasst dabei für jeden der Anzahl Strömungsrichter ein im Strömungsweg der dort einlaufenden Flüssigkeit angeordnetes Strömungsstellglied, welches eine Durchlassanordnung mit einer Durchlassfläche aufweist, durch die die dort in den Tank einlaufende Flüssigkeit zwangsweise strömt bzw. geleitet wird, wobei sich die Durchlassfläche so einstellt, dass die durchströmte Durchlassfläche bei höherem Flüssigkeitsstand größer als bei niedrigerem Flüssigkeitsstand ist.

Der Erfinder hat erkannt, dass bei bisherigen hydrodynamischen Abscheidern bei stark schwankenden Einlaufvolumenströmen, wie sie in letzter Zeit aufgrund von Wetterereignissen, wie Starkregen oder ausgeprägten Dürrephasen, häufiger vorkommen, keine optimale Ausbildung der zur Sedimentation nötigen Tangential-(bzw. Spiral-) Zuströmung im gesamten möglichen Spektrum an Einlaufvolumenströmen erfolgt. Um die zu Sedimentationszwecken nötigen, möglichst konstanten Strömungsverhältnisse im Tank des hydrodynamischen Abscheiders zu schaffen, wird daher der Einbau einer Strömungseinstelleinrichtung vorbezeichneter Art vorgeschlagen, um die im Tank herrschenden Strömungsverhältnisse zu verstetigen. Dadurch wird vermieden, dass bei niedrigen Einlaufvolumenströmen - etwa während Dürre - die einlaufende Flüssigkeit nicht in die gewünschte Rotationsbewegung entlang der Innenwand des Tanks versetzt wird, da die Einströmgeschwindigkeit nicht hoch genug ist und die einströmende Flüssigkeit sozusagen direkt nach unten tropft. Andererseits wird bei großen Einlaufvolumenströmen - etwa bei einem Starkregenereignis - vermieden, dass aufgrund der mit hoher Geschwindigkeit turbulent einströmenden Wassermengen bereits in der Mitte des Bodens des Tanks abgelagerte Partikel wieder aufgewirbelt werden.

Miitels des Strömungsstellglieds gelingt dabei bereits eine gewisse Pufferung von Schwankungen im in den Tank jeweiligen Strömungsrichter einlaufenden Volumenstrom und damit des in den Tank insgesamt eintretenden Volumenstroms, was zu einer Glättung der Strömungsgeschwindigkeit der Einlassströmung in Tangentialrichtung führt.

Noch weiter verbessert im Sinne einer möglichst gleichförmigen, tangentialen Strömungsgeschwindigkeit der Einlassströmung wird die Strömungseinstelleinrichtung erfindungsgemäß durch ein Strömungsregelglied für jeden der Anzahl Strömungsrichter, welches das zugeordnete Strömungsstellglied im Ansprechen auf eine Änderung des Flüssigkeitsstands im Strömungsrichter oder im Tank durch Änderung der Durchlassfläche in Größe und/oder Höhenlage einstellt. Auch eine Verstellung der Form der Durchlassfläche oder einer Richtung, in die die Einlassströmung in den Tank geleitet wird, wäre denkbar. Denn es hat sich herausgestellt, dass allein durch eine größere durchströmte Durchlassfläche bei höherem Füllstand gegenüber einer kleineren Durchlassfläche bei niedrigerem Füllstand das Niveau der tangentialen Strömungsgeschwindigkeit der Einlassströmung nicht konstant oder nahezu konstant gehalten werden kann, wie dies aber beispielsweise durch eine Regelung der Größe des Querschnitts von durchströmten Durchlassöffnungen und deren Höhenlage je nach Füllstand im Tank oder bevorzugt im Strömungsrichter gelingt.

Um die Regelung der tangentialen Strömungsgeschwindigkeit auf einen möglichst konstanten Wert in Abhängigkeit vom Füllstand im Strömungsrichter oder im Tank zu bewirken, ist weiterhin erfindungsgemäß ein Messglied oder für jeden der Strömungsrichter ein Messglied vorgesehen, welches den Füllstand im Tank oder im jeweiligen Strömungsrichter erfasst, so dass das zugeordnete Strömungsregelglied bzw. die Anzahl Strömungsregelglieder im Ansprechen auf die Vorgabe des Füllstandmessglieds betätigbar ist bzw. betätigt wird, um das zugeordnete Strömungsstellglied bzw. alle Strömungsstellglieder einzustellen.

Vorteilhafte Weiterbildungen der Erfindungen sind Gegenstand der Unteransprüche.

Als Strömungsstellglied eignet sich beispielsweise eine Durchlasswand, die im Strömungsweg der einlaufenden Flüssigkeit angeordnet ist, sich in Höhenrichtung, also zum Beispiel vertikal erstreckt, und von auf unterschiedlichen Höhen angeordnete Durchlässe durchdrungen ist. Die Durchlässe bilden dann insgesamt die Durchlassanordnung und eine in Abhängigkeit von der Höhe des Füllstandes variable Durchlassfläche, durch die die Einlassströmung in den Tank strömt, so dass die Durchlassfläche im Arbeitsbereich der Durchlassanordnung, also demjenigen Höhenbereich, in dem sich Durchlässe befinden, bei höherem Füllstand größer als bei niedrigerem Füllstand ist.

Vorteilhaft weist der Strömungsrichter dabei einen innenseitig an die zugeordnete Zulauföffnung anbaubaren Zulauftopf auf, welcher eine in etwa in Tangentialrichtung des Tanks weisende Seite bzw. Seitenwand bzw. Seitenwandabschnitt hat, die bzw. der das Strömungsstellglied, also vorteilhaft die mit der Durchlassanordnung versehene Durchlasswand bildet. Der Zulauftopf bildet dann den mit der Durchlassanordnung versehenen Strömungsrichter.

Das Strömungsregelglied kann dabei beispielsweise als Schieber oder Klappe ausgebildet sein, welcher der Durchlasswand bzw. der Durchlassanordnung zugeordnet ist und im Ansprechen auf Änderungen des Füllstands (F) im Strömungsrichter oder im Tank vor der Durchlassanordnung verschoben bzw. verschwenkt werden kann, um so je nach Füllstand unterschiedliche der Durchlassöffnungen freizugeben und/oder andere zu verschließen. Dabei hat sich gezeigt, dass es vorteilhaft ist, wenn die bei Niedrig-Füllstand offenen Durchlässe bzw. Durchlassöffnungen im Querschnitt klein sind, also eine kleine durchströmte Durchlassfläche bilden, die höheren Füllständen zugeordneten Durchlässe jedoch mit steigendem Füllstand immer größere Querschnitte aufweisen. Auch die Anzahl der einem bestimmten Füllstand zugeordneten Durchlässe kann mit steigendem Füllstand ansteigen.

Es wird davon ausgegangen, dass die Querschnittsfläche des jeweiligen Durchlasses, bevorzugt in Form einer kreisrunden Öffnung in Zusammenwirkung mit den sich aus dem Füllstand ergebenden Druck der anstehenden Wassersäule die tangentiale Strömungsgeschwindigkeit der vom jeweiligen Durchlass gebildeten Düse bestimmt. Dementsprechend wird mit dem Strömungsregelglied vorteilhaft nicht nur einfach eine mit dem Ansteigen des Füllstandes ansteigende Anzahl von durchströmten Durchlässen an der Durchlassanordnung bereitgestellt, sondern genau diejenigen Durchlässe, die in Querschnittsflächen und/oder Höhenlagen den jeweils erreichten Füllstand entsprechen freigegeben und vorteilhaft die anderen Füllständen entsprechenden Durchlässe verschlossen.

Als Strömungsmessglied eignen sich dabei besonders Schwimmer bzw. Schwimmerelemente, insbesondere dann, wenn das bzw. die Strömungsregelglieder als mit dem Schwimmer verbundene Schieber ausgebildet sind. Es wäre jedoch auch denkbar, z.B. kapazitive Füllstandsaufnehmer oder dergleichen vorzusehen und als Strömungsregelglieder motorbetriebene Schieber, Tore oder Drosselklappen oder dergleichen.

Meist ist an dem Tank des hydrodynamischen Abscheiders eine einzige radiale Zulauföffnung vorgesehen, so dass im Folgenden von "dem" Strömungsstellglied, "dem" Strömungsregelglied etc. die Rede ist. Es ist aber klar, dass an jeder Zulauföffnung ein entsprechendes Element vorgesehen sein kann.

Vorteilhaft ist also ein an der Durchlasswand höhenverschiebbar angebrachter und vorteilhaft auch dort geführter Schieber als Strömungsregelglied vorgesehen, welcher im Ansprechen auf den Füllstand im Zulauftopf des Strömungsrichters oder im Tank des hydrodynamischen Abscheiders die auf der den aktuellen Füllstand zugeordneten Höhenabschnitt vorgesehene Anzahl Durchlässe frei gibt. Besonders bevorzugt ist es aber dabei auch, wenn der Schieber so ausgebildet ist, dass Durchlässe in tieferen Regionen der Durchlassanordnung verschlossen werden, wenn der Schieber im Ansprechen auf ein Ansteigen des Füllstands nach oben hin bewegt wird und dann Durchlässe in oberen Regionen der Durchlassanordnung frei gibt, die höheren Füllständen zugeordnet sind. Dazu kann der Schieber ein zumindest unterseitig von Wandabschnitten des Schiebers begrenztes Freigabefenster aufweisen, so dass mit einer Aufwärtsbewegung des Schiebers unterhalb des Freigabefensters befindliche Durchlässe der Durchlassanordnung an der Durchlasswand von dem unterseitigen Wandabschnitt des Schiebers verdeckt werden, wohingegen das Freigabefenster darüber befindliche Durchlässe der Durchlassanordnung frei gibt. Ist das Freigabefenster auch oberseitig von einem Wandabschnitt des Schiebers begrenzt, so kann auch sichergestellt werden, dass auch oberhalb der aktuell am Freigabefenster freigegebenen Durchlässe befindliche Durchlässe der Durchlassanordnung nicht durchströmt werden, obwohl möglicherweise der Füllstand bereits die Höhe dieser Durchlässe erreicht hat, solange der Schieber mit seinem Freigabefenster nicht nach oben hin bewegt wird.

Bevorzugt ist es, wenn der das Strömungsregelglied bildende Schieber mit dem das Strömungsmessglied bildenden Schwimmer fest verbunden ist, so dass der Schwimmer bei einem Aufschwimmen im ansteigenden Füllstand bzw. bei einem Absinken im absinkenden Füllstand den Schieber entsprechend betätigt und damit die als Strömungsstellglied dienende Durchlassanordnung so eingeregelt wird, dass die tangentiale Strömungsgeschwindigkeit der durchtretenden Einlassströmung unabhängig vom Volumenstrom der einlaufenden Flüssigkeit - sich abbildend im Füllstand - konstant gehalten werden kann oder zumindest so eingestellt werden kann, dass im Ansprechen auf Änderungen im Volumenstrom der einlaufenden Flüssigkeit auftretende Änderungen der tangentialen Strömungsgeschwindigkeit der Einlassströmung gedämpft werden.

Es wäre aber auch eine geschlitzte Membran als Durchlassanordnung denkbar, wobei die Membran so gestaltet ist, dass der bzw. die Schlitze sich im Ansprechen auf einen ansteigenden Füllstand und damit einen ansteigenden Wasserdruck der Einlaufströmung aufweiten. Die Membran würde dann einem integrierten Stell-, Regel- und Messglied entsprechen.

Vorteilhaft ist der Schwimmer dabei im Zulauftopf angeordnet, vorzugsweise innenseitig im Zulauftopf in dort an der Durchlasswand angebrachten Führungen geführt, so dass der Schwimmer auf dem Füllstand im Zulauftopf aufschwimmt und nicht auf dem Füllstand im Tank. Denn eine Regelung der tangentialen Einströmgeschwindigkeit in Abhängigkeit vom Füllstand im Tank ist zwar denkbar. Vordringlich kommt es dafür aber auf den - an der Durchlasswand anstehenden - Füllstand im Zulauftopf an.

Vorteilhaft weist der Bausatz ferner eine Anzahl innenseitig jeweils an eine zugeordnete Ablauföffnung anbaubarer Ablauftöpfe auf, die jeweils zum Abführen des durch den in den Tank geleiteten Flüssigkeitstroms durch die Ablauföffnungen nach unten hin offen sind, so dass die im Tank enthaltene Flüssigkeit nach Sedimentation der enthaltenen Schwebstoffe wieder ausgeschleust werden kann. Als Ölsperre kann dabei ein Wehr oder eine Schikane vorgesehen sein, über die Strömung in den zugeordneten Ablauftopf geleitet wird.

Weiterhin vorteilhaft weist der Bausatz eine Bypassleitung auf, welche jeden der Anzahl zulaufseitiger Strömungsrichter bzw. Zulauftöpfe mit einem zugeordneten der weiteren Anzahl Ablaufbauteile verbindet. Die Bypassleitung kann dann wie an sich aus dem Stand der Technik bekannt für den Fall eines überhöhten Einlaufvolumenstroms als Kurzschlussleitung zwischen Zulauf und Ablauf des hydrodynamischen Abscheiders dienen. Zu diesem Zweck weist der Strömungsrichter bzw. Zulauftopf vorzugsweise oberhalb des durch die Höhenerstreckung der Durchlassanordnung gebildeten Arbeitsbereichs eine Bypassöffnung auf, an der die Bypassleitung an den Strömungsrichter bzw. Zulauftopf angeschlossen ist. Das Ablaufbauteil kann dann auf gleicher Höhe oder leicht darunter eine Bypassmündungsöffnung aufweisen, welche über die Bypassleitung flüssigkeitsleitend mit der Bypassöffnung verbunden ist.

Die Bypassöffnung kann dabei in einem gegenüber der Durchlasswand in einer Horizontalrichtung versetzten Bypasswandabschnitt des Zulauftopfs ausgenommen sein, schon um die Betätigung des Schiebers nicht zu beeinträchtigen. Der seitlich versetzte Bypasswandabschnitt kann dabei zusätzlich mit einem Bypassschieber oder einer Bypassklappe versehen sein, welcher bzw. welche wiederum mit einem Bypassschwimmer verbunden ist. Damit lässt sich auch bei Zuständen, in denen der Füllstand bereits an die Bypassöffnung heranreicht, obwohl noch Durchlassöffnungen an der Durchlasswand offen sind, eine Art Bypasswehr an der Bypassöffnung errichten, um sicherzustellen, dass die Bypassöffnung erst freigegeben wird, wenn der Füllstand den sich über die Höhenerstreckung der Durchlassanordnung erstreckenden Arbeitsbereich übersteigt.

Bevorzugt weist der Bypasswandabschnitt die andere Tangentialrichtung wie die Durchlasswand, so dass die Bypassöffnung und deren Anschluss and Bypassleitung dann im zur tangentialen Einlasströmung sozusagen rückseitigen Bereich Platz finden. Denn dann kann die Bypassleitung mit ringsegmentförmigem Verlauf entlang der Innenwand des Tanks zu der Bypassmündungsöffnung geführt werden. Dies hat den Vorteil, dass der Bereich oberhalb des Zentrums des Tanks für Zugriffe zwecks Entnahme der sedimentierten Teilchen freibleibt.

Weitere Vorteile und Ausgestaltungen der Erfindung werden anhand der in den nachfolgenden Figuren dargestellten Ausführungsformen der Erfindung näher erläutert. Es zeigen:
- Figur 1: eine perspektivische Schnittansicht eines hydrodynamischen Abscheiders gemäß einer ersten Ausführungsform der Erfindung;
- Figuren 2 - 5: perspektivische Ansichten des in dem hydrodynamischen Abscheider der in Figur 1 gezeigten Ausführungsform verbauten Zulauftopfs bei unterschiedlichen Füllständen;
- Figur 6: eine Detaildarstellung bei dem in Figur 4 gezeigtem Füllstand an der Durchlassanordnung des Zulauftopfs;
- Figur 7: eine weitere Detaildarstellung an der mit der Bypassöffnung versehenen Seite des in den vorherigen Figuren gezeigten Zulauftopfs bei dem in Figur 4 gezeigten Füllstand;
- Figur 8: eine der Figur 7 entsprechende Ansicht, jedoch bei dem in Figur 5 gezeigtem Füllstand im Zulauftopf;
- Figur 9: einen hydrodynamischen Abscheider gemäß einer weiteren Ausführungsform der Erfindung;
- Figur 10: ein Zulaufbauteil zum innenseitigen Anbau an die Zulauföffnung eines hydrodynamischen Abscheiders gemäß einer weiteren Ausführungsform der Erfindung;
- Figur 11: ein Zulaufbauteil zum innenseitigen Anbau an die Zulauföffnung eines hydrodynamischen Abscheiders gemäß einer wieteren Ausführungsform der Erfindung;
- Figuren 12 und 13: ein Zulaufbauteil zum Anbau an eine Zulauföffnung eines hydrodynamischen Abscheiders gemäß einer weiteren Ausführungsform der Erfindung bei unterschiedlichen Füllständen;
- Figuren 14 und 15: ein Zulaufbauteil zum innenseitigen Anbau an die Zulauföffnung eines hydrodynamischen Abscheiders gemäß einwieweiteren Ausführungsform der Erfindung bei unterschiedlichen Füllständen;
- Figuren 16 und 17: ein Zulaufbauteil zum innenseitigen Anbau an die Zulauföffnung eines hydrodynamischen Abscheiders gemäß wieer weiteren Ausführungsform der Erfindung bei unterschiedlichen Füllständen;
- Figuren 18 und 19: ein Zulaufbauteil zum innenseitigen Anbau an die Zulauföffnung eines hydrodynamischen Abscheiders gemwieeiner weiteren Ausführungsform der Erfindung bei unterschiedlichen Füllständen;
- Figuren 20 und 21: ein Zulaufbauteil zum innenseitigen Anbau an die Zulauföffnung eines hydrodynamischen Abscheiders wieäß einer weiteren Ausführungsform der Erfindung bei unterschiedlichen Füllständen; und
- Figuren 22 und 23: Ablaufbauteile gemäß weiteren Ausführungsformen der Erfindung.

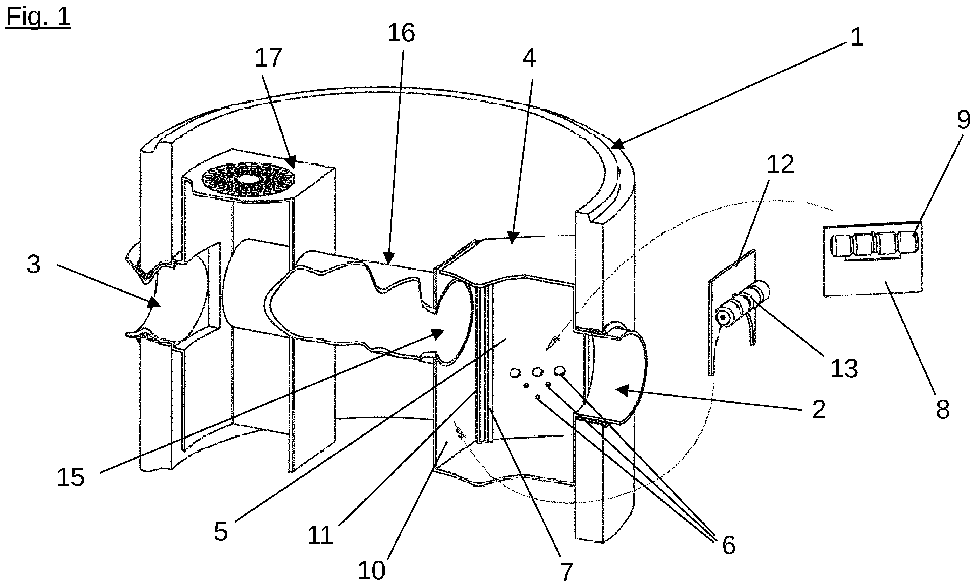

Zunächst wird Bezug genommen auf die Figur 1, welche einen hydrodynamischen Abscheider zeigt, der mithilfe eines Bausatzes gemäß einer Ausführungsform der Erfindung aufgebaut ist. Der hydrodynamische Abscheider hat einen zylindrischen Tank in Form eines stehenden Zylinders, mit einer zylindrischen Seitenwand 1, wobei hier lediglich der Höhenbereich des Tanks zu sehen ist, auf dem sich seine radiale Zulauföffnung 2 und seine radiale Ablauföffnung 3 befinden. Der Tank erstreckt sich also wesentlich weiter nach unten als dargestellt.

Es sein klargestellt ,dass im Rahmen der Erfindung mit "Tank" auch jede Art von zylinderförmigen Schachtbauwerk oder dergleichen gemeint sein soll. Ein oberseitiger Verschluss des Tanks bzw. Schachtbauwerks ist dabei vorteilhaft, aber nicht zwingend.

Die Zulauföffnung 2 ist mit einem Zulaufbauteil bzw. Zulauftopf 4 versehen, die Ablauföffnung 3 mit einem Ablaufbauteil 17. Das Ablaufbauteil 17 ist über eine Bypassleitung 16 mit dem Zulaufbauteil 4 verbunden.

Das Zulaufbauteil 4 hat die Form eines unten geschlossenen Topfs, welcher mit einem abgedichteten Stutzen in die Zulauföffnung 3 gesteckt ist. Das Ablaufbauteil bzw. der Ablauftopf 17 hat die Form eines umgedrehten, also nach unten hin offenen Topfs, welches mit einem Stutzen in die Ablauföffnung gesteckt ist.

Die Steckverbindung kann dabei jeweils mit entsprechenden Dichtungen versehen sein. Am aus dem Tank ragenden Ende der Stutzen könnte dabei ein Anschlussgewinde vorgesehen sein, um eine Zulauf- bzw. Ablaufleitung beispeislweise nach Art einer fachnotorisch bekannten Tankdurchführung anschließen zu können. Auch eine Flanschverbindung zum Anschrauben des Zulauftopfs oder des Ablauftopfs an die Innenwand des Tanks wäre denkbar.

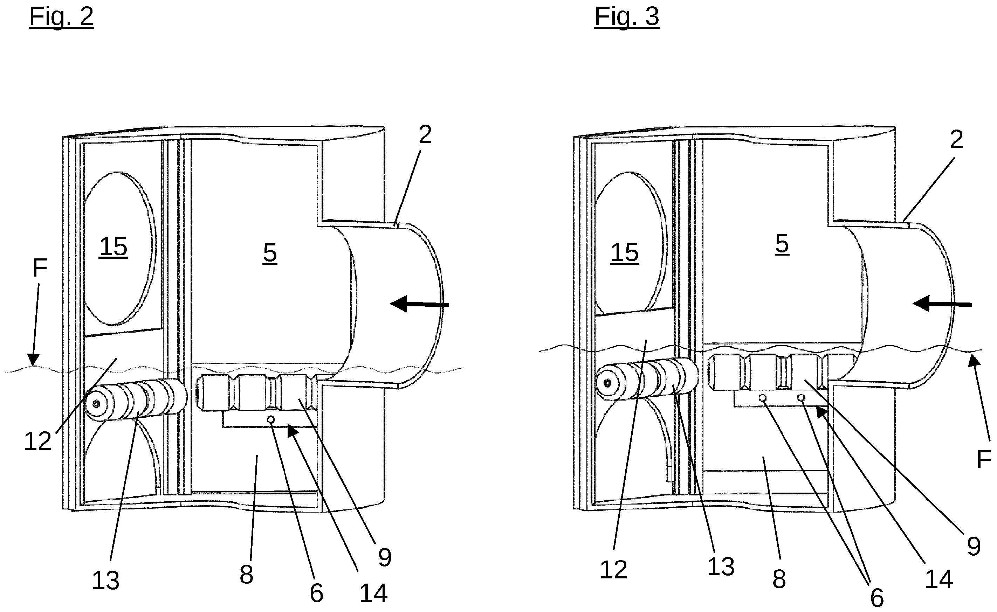

An einer innenseitig am Tank in etwa in Tangentialrichtung weisenden Durchlasswand 5 des Einlauftopfs 4 sind entsprechend ebenfalls in etwa in Tangentialrichtung weisende Durchlässe ausgeformt, welche insgesamt eine Durchlassanordnung 6 bilden, durch die die in den Tank einlaufende Einlasströmung geleitet wird, jedenfalls solange sich ein in den Figuren 2 bis 5 eingezeichneter Füllstand F in einem sich über die Höhe der Durchlassanordnung 6 erstreckenden Arbeitsbereich hält.

In einem radial nach innen gewandten Bypasswand 10 des Einlauftopfs 4 ist dabei oberhalb der Durchlassanordnung 6 eine Bypassöffnung 15 ausgenommen, an der die Bypassleitung 16 abgeht, um dann wiederum radial in den Auslauftopf 17 einzumünden.

An der Durchlasswand 5 sind dabei auf beiden Seiten der Durchlassanordnung 6 vertikal verlaufenden Führungen bzw. Führungsschienen 7 angebracht, an der Bypasswand 10 entsprechende, vertikal verlaufende Führungen bzw. Führungsschienen 11 auf beiden Seiten der Bypassöffnung 15. Die Führungsschienen 7 an der Durchlasswand 5 sind einem Schieber 8 zugeordnet, die Führungsschienen 11 an der Bypasswand 10 einem Bypassschieber 12. An dem Scheiber 8 ist ein Schwimmer 9 angebracht, an dem Bypassschieber 12 ein Bypassschwimmer 13.

Die Durchlassöffnungen der Durchlassanordnung 6 weisen dabei jeweils eine vorzugsweise kreisrunde Querschnittsfläche auf und werden von unten nach oben hin immer größer und mehr, ausgehend von einer Durchlassöffnung mit kleinstem Querschnitt in der untersten Zeile, über zwei Durchlassöffnungen mit mittlerem Querschnitt in der mittleren Zeile bis zu drei Durchlassöffnungen mit größtem Querschnitt in der dritten, höchstgelegenen Zeile. Die Querschnitte der Durchlassöffnungen sind gegenüber dem Querschnitt der noch weiter oben angeordneten Bypassöffnung 15 vorteilhaft kleiner.

In den Figuren 2 bis 5 wird die Funktion der mittels des Schiebers 8 an der Durchlassanordnung 6 durchgeführten Regelung der tangentialen Einlassströmung in Abhängigkeit vom Füllstand F im Einlauftopf 4 näher erläutert. Fig. 2 zeigt eine Situation bei niedrigem Füllstand F. Der auf der Flüssigkeit im Einlauftopf 4 aufschwimmende Schwimmer 9 bringt den Schieber 8 in eine Höhe, auf der dessen Freigabefenster die unterste Zeile der Durchlassöffnungen, also die eine unterste Durchlassöffnung kleinsten Querschnitts freigibt, die darüber angeordneten, größeren und zahlreicheren Durchlassöffnungen aber versperrt. Die Einlassströmung muss also durch diese eine, kleine Düse strömen und erlangt dabei eine entsprechend hohe Tangentialgeschwindigkeit.

Steigt nun der Füllstand F im Einlauftopf 4, so schwimmt der Schwimmer 9 weiter auf, wodurch sich der Schieber 8 insgesamt, aber insbesondere sein Freigabefenster 14 nach oben bewegt, siehe Fig. 3, so dass die beiden mittelgroßen Durchlassöffnungen in der mittleren Zeile der Durchlassanordnung 6 freigegeben werden und die anderen Durchlassöffnungen verdeckt werden. Die Einlassströmung muss also durch diese beiden mittelgroßen Düsen strömen. Eine zu hohe Tangentialgeschwindigkeit, die bei Strömung durch die kleinste, unterste Düse entstehen würde, wird vermieden.

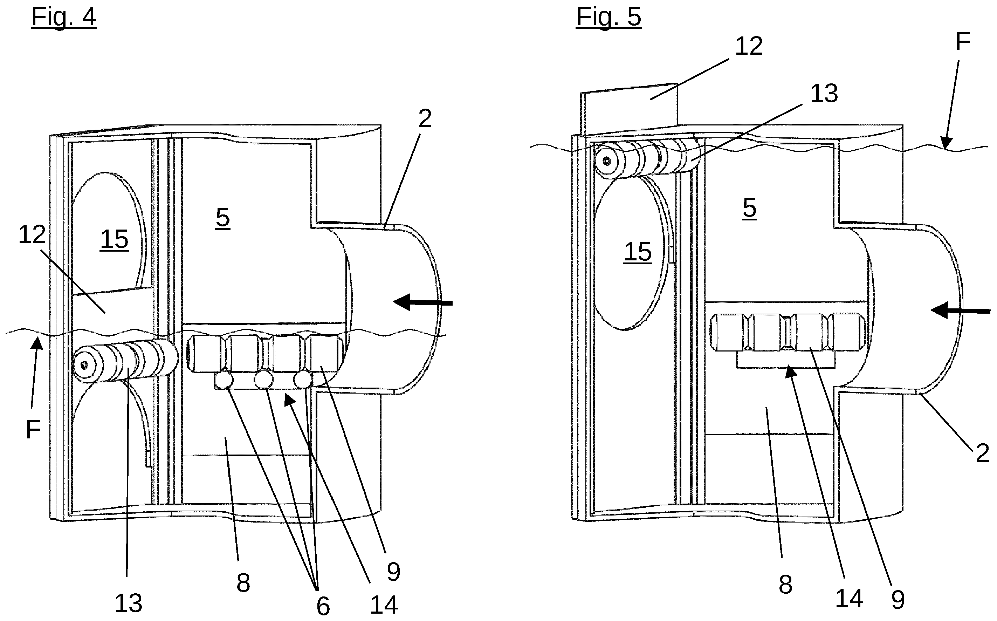

Steigt der Füllstand F im Einlauftopf 4 noch weiter, so tritt die in Fig. 4 gezeigte Situation ein, in der der Schieber 8 vom Schwimmer 9 noch weiter nach oben geschoben wird und dann die oberste Zeile mit den drei größten Durchlassöffnungen freigibt, die darunter befindlichen, kleineren Düsen aber verschließt, bis der Schieber 8 dann bei weiter ansteigendem Füllstand dann seine in Fig. 5 gezeigte, obere Endlage erreicht, in der der Füllstand der Arbeitsbereich der Durchlassanordnung 6 überschritten hat und der Schieber 8 dementsprechend die Durchlassanordnung 6 vollständig verschließt.

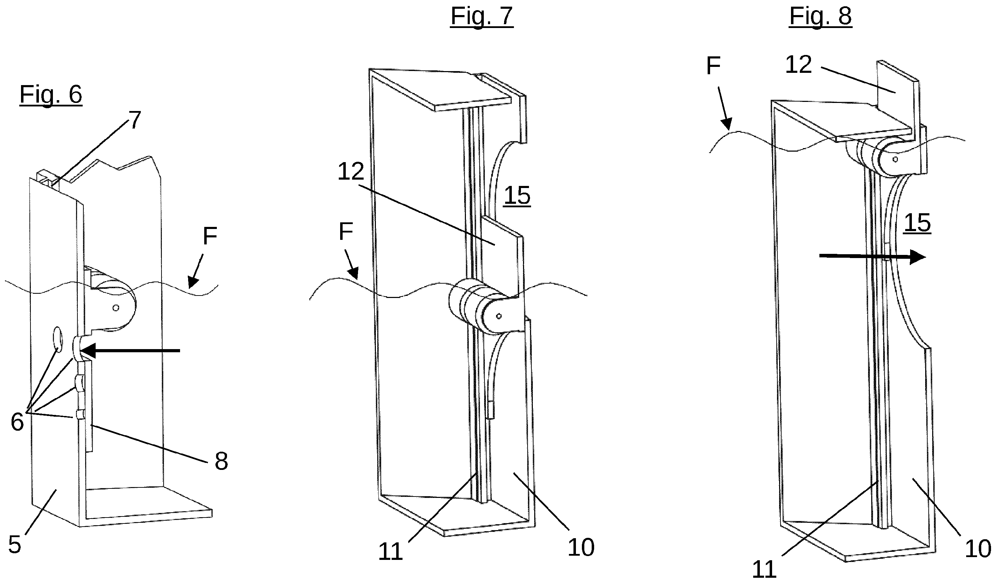

Gleichzeitig mit der Aufwärtsbewegung des mit dem Schwimmer 9 verbundenen Schiebers 8 erfolgt eine Aufwärtsbewegung des mit dem Bypassschwimmer 13 versehenen Bypassschiebers 12. Die Situation in Fig. 4 ist dabei in den Figuren 6 und 7 im Einzelnen dargestellt. Man erkennt, dass der Bypassschieber 12 in dieser Stellung ca. das untere Drittel der Bypassöffnung 15 verdeckt und so eine Art Bypasswehr bildet, während der Schieber 8 die drei größten Durchlässe bzw. Durchlassöffnungen freigibt. Erst wenn der Schieber 8 seine obere Endlage erreicht hat (Fig. 5) und der Füllstand F im Einlauftopf noch weiter steigt wandert der Bypassschieber bis ganz nach oben in seine obere Endlage, siehe Fig. 5 iVm mit Fig. 8, in der er die Bypassöffnung 15 vollständig freigibt. Eine ungeklärte Durchleitung des Abwassers in die Bypassleitung 16 wird also erst dann hingenommen, wenn der Wasserstand stark gestiegen ist und auch nicht wieder in den Arbeitsbereich der Durchlassanordnung 6 fällt.

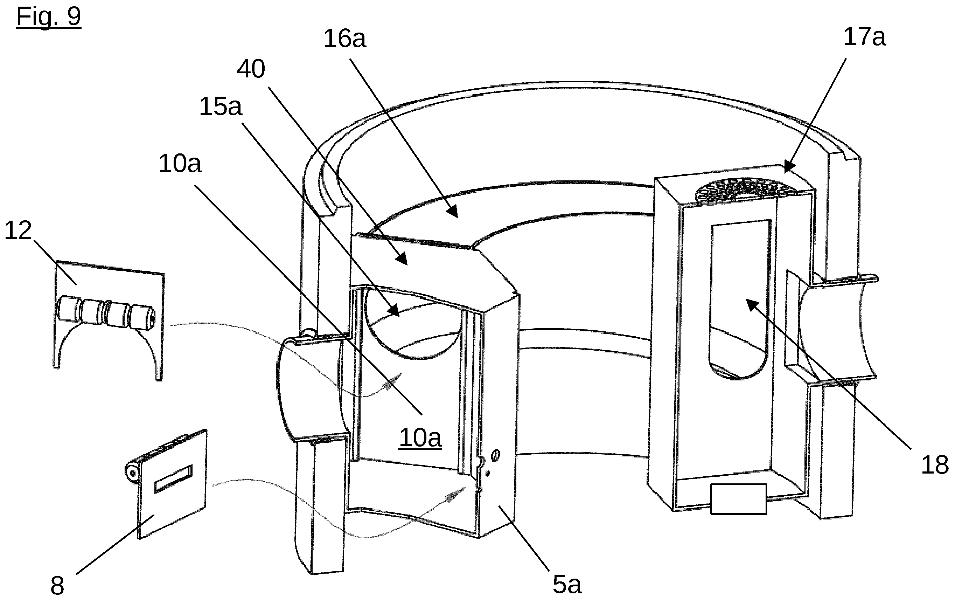

In Fig. 9 ist eine weitere Ausführungsform der Erfindung gezeigt, die sich im Wesentlichen dadurch von der in den vorherigen Figuren gezeigten Ausführungsform unterscheidet, dass die Bypassleitung 16a hier als ringsegmentförmige Bypassrinne entlang des Innenumfangs der Zylinderwand des Tanks erstreckt. Auf diese Weise bleibt der zentrale Bereich des Tanks zu einer Entnahme der im Laufe der Zeit aussedimentierten Schwemmstoffe zugänglich. Dementsprechend weist der Einlauftopf 40 hier eine Bypasswand 10a auf einer der Durchlasswand 5a vorzugsweise gegenüberliegenden, in Tangentialrichtung weisenden Seite auf, so dass die Bypassöffnung 15a an die rückwärtige Bypassrinne 16a anschließt, welche wiederum tangential in eine Bypasseinmündungsöffnung 18 am Auslauftopf 17a einmündet. Am Auslauftopf 17a ist die zur Ausfuhr der Durchströmung des Tanks nötige, unterseitige Öffnung lediglich angedeutet.

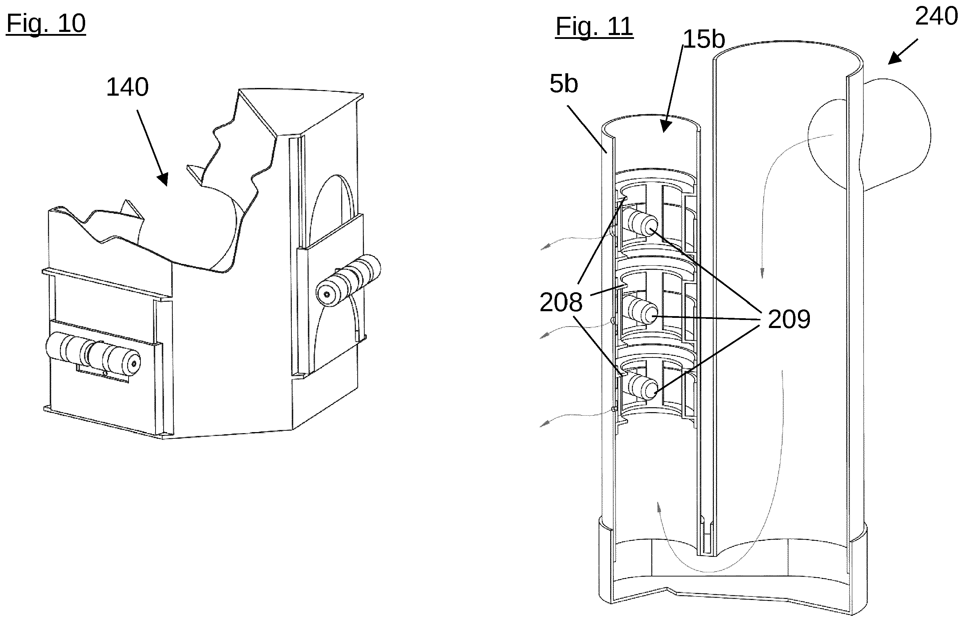

Die weiteren Figuren zeigen Varianten des Einlaufbauteils. So zeigt Fig. 10 ein als Einlauftopf 140 geformtes Einlaufbauteil, bei dem die Schieber außenseitig angebracht und geführt sind. Die Schwimmer schwimmen also nicht in dem Füllstand innerhalb des Einlauftopfs 140 auf, sondern in dem Füllstand innerhalb des Tanks.

Fig. 11 zeigt eine Variante eines Einlaufbauteils 240, welches als Rohr mit einer 180°-Wende zunächst nach unten hin verläuft, um sich dann nach oben hin zu wenden und in einer oberseitigen Bypassöffnung 15b zum Anschluss einer Bypassleitung auszulaufen. Im in Strömungsrichtung gesehen ansteigenden Rohrbereich sind dabei in drei übereinander befindlichen Höhenabschnitten drei in etwa hohlkolbenförmige Schieber 208 vorgesehen, die jeweils mit einem Schwimmer 209 versehen sind und jeweils zugeordnete Durchlassöffnungen im zugeordneten Höhenbereich in Abhängigkeit vom Füllstand freigeben oder sperren.

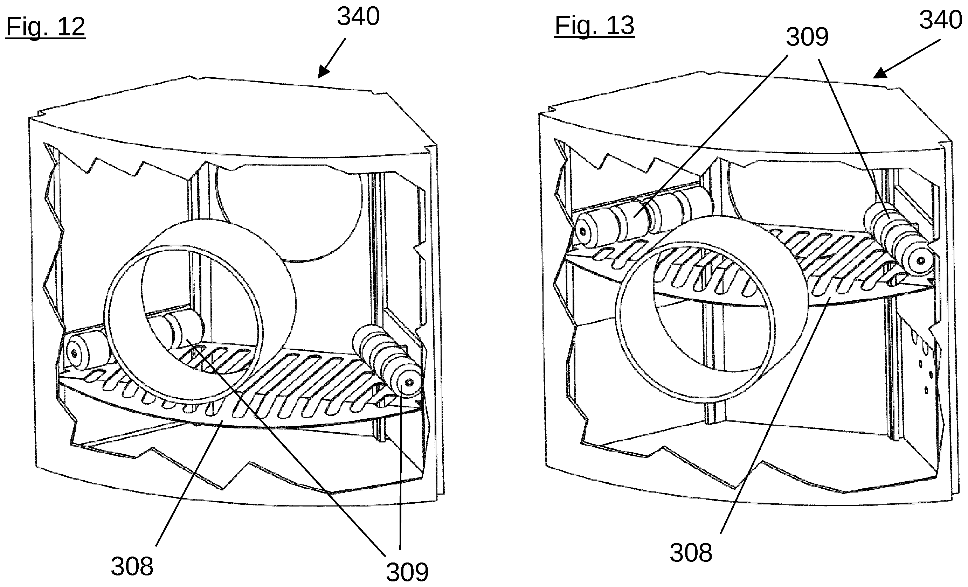

Die Figuren 12 und 13 zeigen einen Einlauftopf 340 gemäß einer weiteren Ausführungsform der Erfindung. Hier ist ein Schieber 308 vorgesehen, der nicht nur an der mit der Durchlassanordnung versehenen Durchlasswand geführt ist, sondern auch noch an der in die gegenüberliegenden, in die andere Tangentialrichtung weisende Wand des Einlauftopfs 340. Der Schieber 308 weist dafür zwei vertikale, plattenförmige Abschnitte auf, die über in sich quer über das Innere des Einlauftopfs 340 erstreckendes Lochblech miteinander verbunden sind. Dabei können sowohl auf der einen als auch an der anderen Seite Schwimmer 309 an den geführten Plattenabschnitten des Schiebers 308 angebracht sein. Alternativ oder ergänzend wäre es aber auch denkbar, einen oder mehrere Schwimmer zentral im Lochblech zu befestigen.

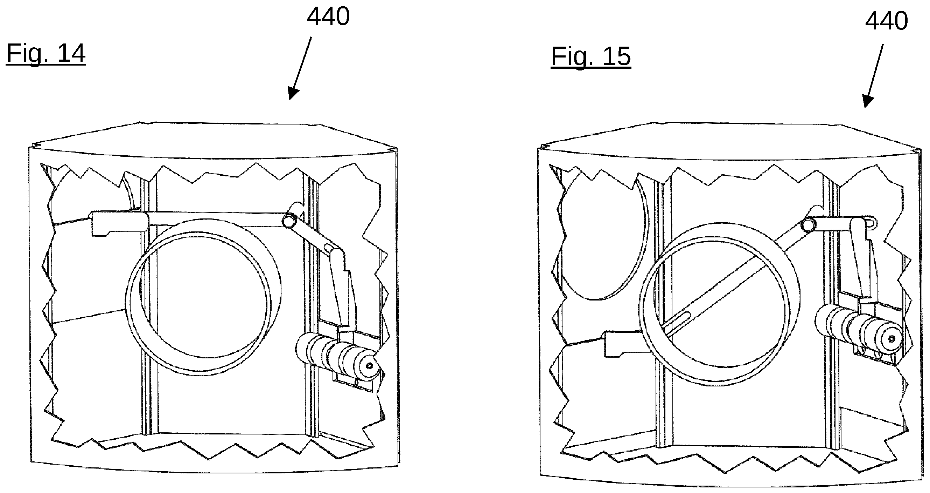

Die Figuren 14 und 15 zeigen einen Einlauftopf 440 gemäß einer weiteren Ausführungsform der Erfindung. Hier ist ein weitgehend dem Schieber 8 der in den Figuren 1 bis 8 gezeigten Ausführungsform entsprechender Schieber vorgesehen, wobei auch das Gehäuse des Einlauftopfs 440 demjenigen der in den Figuren 1 bis 8 gezeigten Ausführungsform entspricht. Abweichend davon ist der Schieber hier aber mit einem Gelenkarm verbunden, der auf seiner gegenüberliegenden Seite an dem Bypassschieber angreift und diesen betätigt. Der Gelenkarm ersetzt somit den Bypassschwimmer 13.

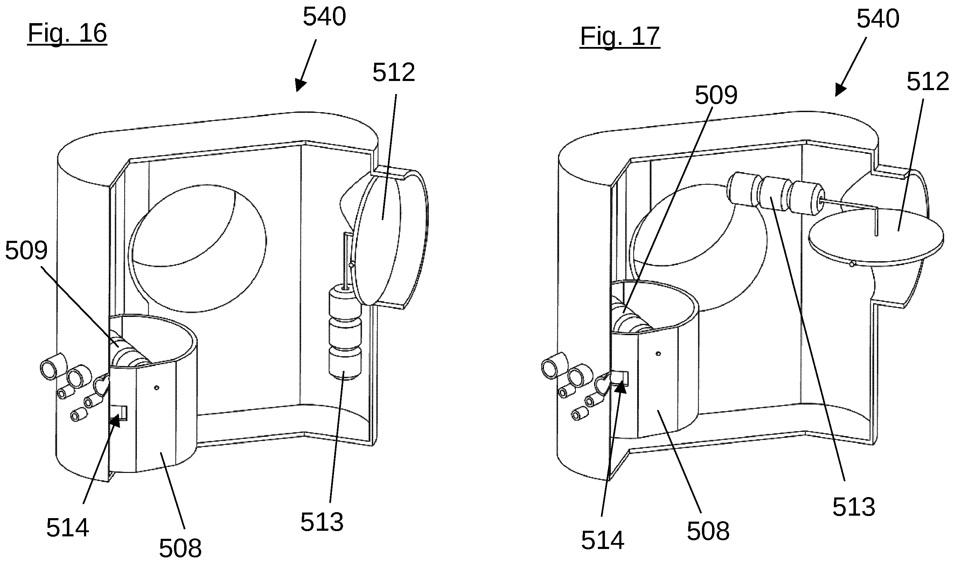

Die Figuren 16 und 17 zeigen einen Einlauftopf 540 gemäß einer weiteren Ausführungsform der Erfindung. Hier ist anstatt eines Bypassschiebers eine Bypassklappe 512 vorgesehen, an der über einen Hebelarm ein Bypassschwimmer 513 befestigt ist. Bei Aufschwimmen des Bypassschwimmers 513 wird die Bypassklappe 512 nach Art einer Drosselklappe verschwenkt und öffnet die Bypassöffnung immer weiter, bis die waagrechte Stellung der Bypassklappe 512 erreicht ist. Hier könnte ein geeignet Anschlag vorgesehen werden, um ein Überdrehen der Bypassklappe 512 bei weiterem Ansteigen des Fülstands zu verhindern.

Es ist ein in etwa kolbenförmiger Schieber 508 mit einem vor der dortigen Durchlassanordnung verschiebbaren Freigabefenster 514 vorgesehen. Die Durchlasswand hat eine entsprechend gekrümmte Form. Die Durchlässe der Durchlassanordnung sind hier als Rohrabschnitte ausgebildet, um die Tangentialströmung noch besser auszuformen. Der kolbenförmige Schieber 508 ist in der zylidnerartig gekrümmten Form der Durchlasswand und der anschließenden Wandabschnitte geführt und weist einen sich über seine Breite erstreckenden Schwimmer 509 auf, so dass ein Verkanten des Schiebers 508 z.B. in engen Führungen ausgeschlossen ist.

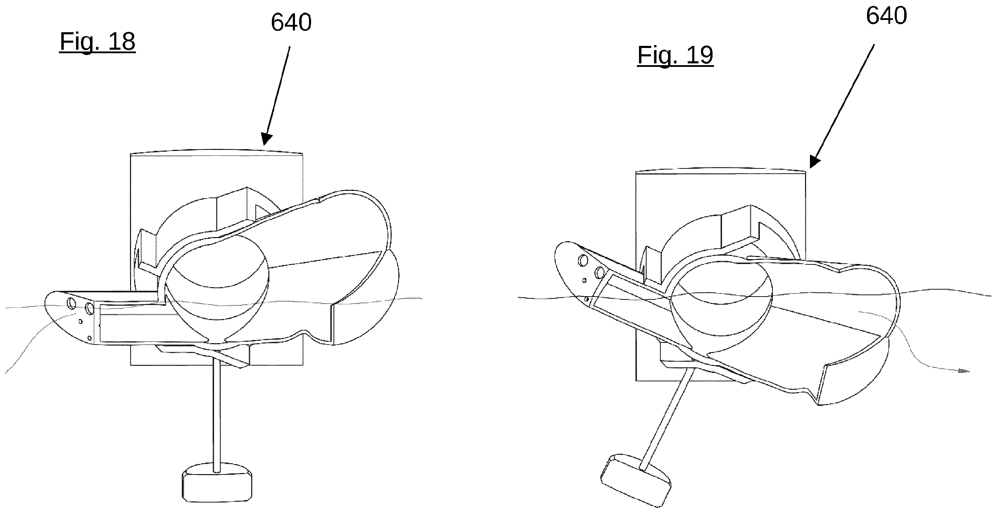

Die Figuren 18 und 19 zeigen einen Einlauftopf 640 gemäß einer weiteren Ausführungsform der Erfindung. Der Einlauftopf 640 weist dabei zwei gelenkig miteinander verbundene Abschnitte auf, wobei die Strömung durch eine Durchlauföffnung im Gelenk aus dem wandbefestigten Abschnitt in den auslenkbaren Abschnitt des Einlauftopfs 640 strömen kann. Der auslenkbare Abschnitt des Einlauftopfs 640 ist unten mit einem Pendelgewicht versehen und weist links einen zur Durchlasswand führenden Rohrabschnitt auf, rechts einen mit leichter Steigung zur Bypassöffnung hin führenden Abschnitt. Steigt der Füllstand, so kippt der zur Durchlasswand führende Rohrabschnitt nach oben und der zur Bypassöffnung hin führenden Abschnitt nach unten, so dass im Ansprechen auf eine Änderung des Füllstands entweder die Durchlassanordnung oder die Bypassöffnung unter Wasser steht. Eine Regelung der Tangentialgeschwindigkeit der die Durchlassanordnung durchströmenden Einlassströmung erfolgt hier aber nicht.

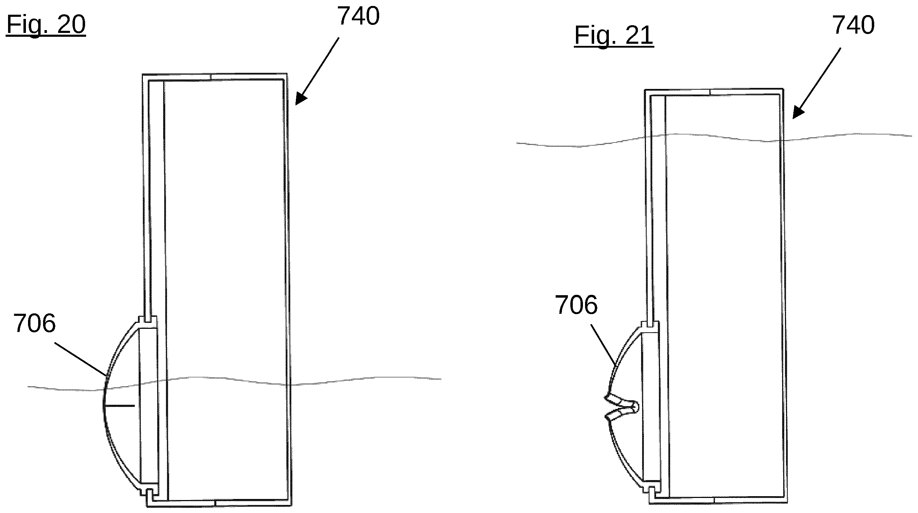

Die Figuren 20 und 21 zeigen schließlich einen Einlauftopf 740 gemäß einer weiteren Ausführungsform der Erfindung, wobei hier anstatt einer Durchlassanordnung mit mehreren Durchlässen, die mittels Schwimmerschieber oder dergleichen freigegeben oder verschlossen werden eine geschlitzte Membran vorgesehen ist, wobei der Schlitz im Ansprechen auf ein Ansteigen des mit dem Füllstand im Einlauftopf 740 ansteigenden Wasserdrucks weiter öffnet und im Ansprechen auf ein Sinken des mit dem Füllstand im Einlauftopf 740 sinkenden Wasserdrucks weiter schließt.

Weitere Abwandlungen und Varianten der gezeigten Ausführungsformen sind möglich, ohne den in den Ansprüchen definierten Rahmen der Erfindung zu verlassen.

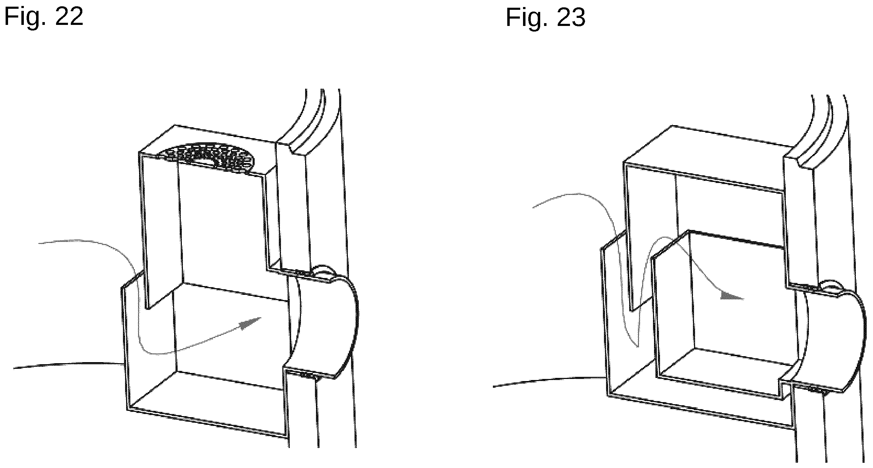

So wäre es beispielsweise denkbar, an dem Auslauftopf 17 unterseitig einen Boden mit einer größeren Fläche und einem nach oben ragenden Rand vorzusehen, der ein umlaufendes Wehr bildet, wie in Figur 22 gezeigt. Auch eine unterseitige Schikane wäre denkbar, wie in Figur 23 gezeigt. Dadurch kann eine Ölsperre gebildet werden und Kurzschlussströmungen im Tank vermieden werden.

## Patentansprüche

1. Bausatz zum Aufbau eines hydrodynamischen Abscheiders aus einem zylindrischen Tank in Form eines stehenden Zylinders mit einer zylinderförmigen Seitenwand (1), die von einer Anzahl radialer Zulauföffnungen und einer weiteren Anzahl radialer Auslauföffnungen durchdrungen wird, wobei der Bausatz für jede der Zulauföffnungen einen Strömungsrichter zum innenseitigen Anbau an die Zulauföffnung umfasst, wobei der Strömungsrichter die durch die Zulauföffnung in den Tank einlaufende Flüssigkeit zu einer in Richtung entlang der Innenoberfläche der Seitenwand (1) überwiegend tangential in den Tank eintretenden Einlassströmung umrichtet, wobei der Bausatz eine Strömungseinstelleinrichtung umfasst, welche die tangentiale Strömungsgeschwindigkeit der in den Tank eintretenden Einlassströmung, zu der der Strömungsrichter die einlaufende Flüssigkeit umrichtet, unabhängig vom Volumenstrom der einlaufenden Flüssigkeit konstant hält oder zumindest so einstellt, dass im Ansprechen auf Änderungen im Volumenstrom der einlaufenden Flüssigkeit auftretende Änderungen der tangentialen Strömungsgeschwindigkeit der in den Tank eintretenden Einlassströmung, zu der der Strömungsrichter die einlaufende Flüssigkeit umrichtet, gedämpft werden, wobei
die Strömungseinstelleinrichtung für jeden der Anzahl Strömungsrichter ein im Strömungsweg der dort einlaufenden Flüssigkeit angeordnetes Strömungsstellglied umfasst, welches eine Durchlassanordnung (6; 706) mit einer Durchlassfläche aufweist, durch die die dort in den Tank einlaufende Flüssigkeit zwangsweise strömt bzw. geleitet wird, wobei sich die Durchlassfläche so einstellt, dass die durchströmte Durchlassfläche bei höherem Flüssigkeitsstand größer als bei niedrigerem Flüssigkeitsstand ist,
**dadurch gekennzeichnet, dass**
jedem Strömungsstellglied ein Strömungsregelglied zugeordnet ist, welches das Strömungsstellglied durch Änderung der Durchlassfläche in Größe und/oder Höhenlage und/oder Form im Ansprechen auf eine Änderung des Füllstand (F) im Strömungsrichter oder im Tank einstellt, und wobei
ein Füllstandmessglied oder für jeden der Strömungsrichter ein Füllstandmessglied vorgesehen, welches den Füllstand im Tank oder im jeweiligen Strömungsrichter erfasst, so dass das zugeordnete Strömungsregelglied bzw. die Anzahl Strömungsregelglieder im Ansprechen auf die Vorgabe des Füllstandmessglieds betätigbar ist bzw. betätigt wird, um das zugeordnete Strömungsstellglied bzw. alle Strömungsstellglieder einzustellen.

2. Bausatz nach Anspruch 1, **dadurch gekennzeichnet, dass** das Strömungsstellglied eine Durchlasswand (5; 5a; 5b) ist, welche die Durchlassanordnung (6; 706) mit der Durchlassfläche aufweist, durch die die dort einlaufende Flüssigkeit gezwungen ist zu strömen, um in den Tank einzutreten, wobei zumindest in einem über die Höhenerstreckung der Durchlassanordnung (6; 706) gebildeten Arbeitsbereich die durchströmte Durchlassfläche bei höherem Füllstand (F) im Strömungsrichter oder im Tank größer als bei niedrigerem Füllstand (F) ist.

3. Bausatz nach Anspruch 1 oder 2, **dadurch gekennzeichnet, dass** das Strömungsregelglied als ein der Durchlassanordnung (6; 706) zugeordneter Schieber (8; 308; 508) ausgebildet ist.

4. Bausatz nach Anspruch 2 oder 3, **dadurch gekennzeichnet, dass** jedes Füllstandmessglied als eine Anzahl Schwimmer (9; 209; 309; 509) ausgebildet ist.

5. Bausatz nach einem der Ansprüche 2 bis 4, **dadurch gekennzeichnet, dass** sich die Durchlasswand (5; 5a; 5b) in Höhenrichtung erstreckt und von den auf unterschiedlichen Höhen angeordneten Durchlässen durchdrungen ist, die zur Bildung der Durchlassanordnung (6), durch die die dort in den Tank einlaufende Flüssigkeit strömen muss, zur Verfügung stehen, wobei vorzugsweise die Größe und/oder Anzahl der pro Höhenabschnitt vorgesehenen Durchlässe nach oben hin ansteigt, und wobei die Durchlässe jeweils vorzugsweise kreisrund sind.

6. Bausatz nach einem der vorhergehenden Ansprüche, **dadurch gekennzeichnet, dass** der Strömungsrichter als ein innenseitig an die Zulauföffnung (2) anbaubarer, vorzugsweise oberseitig geschlossener Zulauftopf (4; 40; 140; 340; 440; 540; 640; 740) ausgebildet ist, welcher eine in etwa in Tangentialrichtung weisende Seite aufweist, an der das Strömungsstellglied bzw. die Durchlasswand (5) mit der Durchlassanordnung (6) ausgebildet ist.

7. Bausatz nach einem der Ansprüche 3 bis 6, **dadurch gekennzeichnet, dass** das Strömungsregelglied als eine Anzahl Schieber (8; 208; 308; 508) oder Klappen ausgebildet ist, vorzugsweise als ein an der Durchlasswand (5) geführter Schieber (8; 308; 508) versehen ist, welche bzw. welcher im Ansprechen auf den Füllstand (F), vorzugsweise den Füllstand (F) im Strömungsrichter, die auf der dem jeweiligen Füllstand (F) zugeordneten Höhenabschnitt vorgesehene Anzahl Durchlässe (6) freigibt.

8. Bausatz nach Anspruch 7, **dadurch gekennzeichnet, dass** der Schieber (8; 508) mindestens ein zumindest unterseitig von Wandabschnitten begrenztes Freigabefenster (14; 514) aufweist, so dass mit einer Aufwärtsbewegung des Schiebers (8; 514) unterhalb des Freigabefensters (14; 514) befindliche Durchlässe von dem unterseitigen Wandabschnitt des Schiebers (8; 508) verdeckt werden.

9. Bausatz nach Anspruch 7 oder 8, **dadurch gekennzeichnet, dass** der Schieber (8; 308; 508) zum Ansprechen auf den Füllstand (F), vorzugsweise den Füllstand (F) im Strömungsrichter mit dem auf dem Füllstand (F) aufschwimmenden Schwimmer (9; 309; 509) verbunden ist.

10. Bausatz nach einem der Ansprüche 7 bis 9, **dadurch gekennzeichnet, dass** der Schieber (8) in an der Durchlasswand (5) angebrachten Führungen (7) geführt ist, vorzugsweise in innenseitig im Zulauftopf (4; 140; 340; 440; 540; 640) an der Durchlasswand (5) angebrachten Führungen (7), so dass der Schwimmer (9) auf dem Füllstand (F) im Zulauftopf (4; 140; 340; 440; 540; 640) aufschwimmt.

11. Bausatz nach einem der vorhergehenden Ansprüche, **dadurch gekennzeichnet, dass** der Bausatz eine weitere Anzahl innenseitig jeweils an eine zugeordnete Ablauföffnung anbaubarer Ablauftöpfe (17; 17a) umfasst, die jeweils zum Abführen des durch den in den Tank geleiteten Flüssigkeitstroms durch die Ablauföffnungen nach unten hin vorzugsweise über eine Wehr oder eine Schikane offen sind.

12. Bausatz nach einem der vorhergehenden Ansprüche, **dadurch gekennzeichnet, dass** eine Bypassleitung (16; 16a) vorgesehen ist, welche jeden der Anzahl zulaufseitiger Strömungsrichter (4; 40) mit einem zugeordneten der weiteren Anzahl Ablaufbauteile (6; 6a) verbindet, wobei der Strömungsrichter (4; 40) vorzugsweise oberhalb des durch die Höhenerstreckung der Durchlassanordnung (6) gebildeten Arbeitsbereichs (6) eine Bypassöffnung (15; 15a; 15b) aufweist, an der die Bypassleitung angeschlossen ist.

13. Bausatz nach Anspruch 12, **dadurch gekennzeichnet, dass** die Bypassöffnung (15; 15a) in einem gegenüber der Durchlasswand (5; 5a) in einer Horizontalrichtung und/oder Vertikalrichtung versetzten Bypasswandabschnitt (10; 10a) des Zulauftopfs (4; 40) ausgebildet ist, wobei der Bypasswandabschnitt (10; 10a) mit einem Bypassschieber (12) oder einer Bypassklappe (512) versehen ist, welcher bzw. welche mit einem Bypassschwimmer (13; 513) so verbunden ist, dass die Bypassöffnung (15; 15a) erst freigegeben wird, wenn der Füllstand (F) den sich über die Höhenerstreckung der Durchlassanordnung (6) erstreckenden Arbeitsbereich übersteigt.

14. Bausatz nach Anspruch 12 oder 13, **dadurch gekennzeichnet, dass** der Bypasswandabschnitt (10a) in die andere Tangentialrichtung wie die Durchlasswand (5a) weist und die Bypassleitung (16a) mit ringsegmentförmigem Verlauf entlang der Innenwand des Tanks zu der Bypassmündungsöffnung (18) geführt ist, welche in einem in Tangentialrichtung der Bypassöffnung (15a) zugewandten Wandabschnitt des Ablauftopfs (17a) ausgenommen ist.

15. Hydrodynamischen Abscheider mit einem zylindrischen Tank in Form eines stehenden Zylinders mit einer zylinderförmigen Seitenwand (1), die von einer Anzahl radialer Zulauföffnungen und einer weiteren Anzahl radialer Auslauföffnungen durchdrungen ist, **gekennzeichnet durch** einen eingebauten Bausatz nach einem der vorhergehenden Ansprüche.

## Claims

1. Construction kit for assembling a hydrodynamic separator from a cylindrical tank in the form of an upright cylinder with a cylindrical side wall (1) which is penetrated by a number of radial inlet openings and a further number of radial outlet openings, wherein the construction kit comprises, for each of the inlet openings, a flow director for mounting on the inside of the inlet opening, wherein the flow director redirects the liquid entering the tank through the inlet opening into an inlet flow entering the tank predominantly tangentially in a direction along the inner surface of the side wall (1), wherein the construction kit comprises a flow adjusting device which keeps the tangential flow velocity of the inlet flow entering the tank, into which the flow director redirects the inflowing liquid, constant independently of the volume flow of the inflowing liquid, or at least adjusts it such that changes in the tangential flow velocity of the inlet flow entering the tank, into which the flow director redirects the inflowing liquid, occurring in response to changes in the volume flow of the inflowing liquid, are damped, wherein
the flow adjusting device comprises, for each of the number of flow directors, a flow adjusting member arranged in the flow path of the liquid flowing in there, which has a passage arrangement (6; 706) with a passage area through which the liquid flowing into the tank there is forced to flow or is guided, wherein the passage area adjusts itself such that the flow-through passage area is larger at a higher liquid level than at a lower liquid level,
**characterized in that**
a flow control member is assigned to each flow adjusting member, which adjusts the flow adjusting member by changing the passage area in size and/or height position and/or shape in response to a change in the fill level (F) in the flow director or in the tank, and wherein
a fill level measuring member or, for each of the flow directors, a fill level measuring member is provided, which detects the fill level in the tank or in the respective flow director, so that the assigned flow control member or the number of flow control members can be actuated or is actuated in response to the specification of the fill level measuring member in order to adjust the assigned flow adjusting member or all flow adjusting members.

2. Construction kit according to claim 1, **characterized in that** the flow adjusting member is a passage wall (5; 5a; 5b) which has the passage arrangement (6; 706) with the passage area through which the liquid flowing in there is forced to flow in order to enter the tank, wherein at least in a working area formed over the height extension of the passage arrangement (6; 706), the passage area flowed through is larger at a higher fill level (F) in the flow director or in the tank than at a lower fill level (F).

3. Construction kit according to claim 1 or 2, **characterized in that** the flow control member is configured as a slider (8; 308; 508) assigned to the passage arrangement (6; 706).

4. Construction kit according to claim 2 or 3, **characterized in that** each fill level measuring member is configured as a number of floats (9; 209; 309; 509).

5. Construction kit according to one of claims 2 to 4, **characterized in that** the passage wall (5; 5a; 5b) extends in the height direction and is penetrated by the passages arranged at different heights, which are available to form the passage arrangement (6) through which the liquid flowing into the tank there must flow, wherein preferably the size and/or number of passages provided per height section increases towards the top, and wherein the passages are each preferably circular.

6. Construction kit according to one of the preceding claims, **characterized in that** the flow director is configured as an inlet pot (4; 40; 140; 340; 440; 540; 640; 740) which can be mounted on the inside to the inlet opening (2) and is preferably closed on the top side, which has a side pointing approximately in the tangential direction, on which the flow adjusting member or the passage wall (5) with the passage arrangement (6) is formed.

7. Construction kit according to one of claims 3 to 6, **characterized in that** the flow control member is configured as a number of sliders (8; 208; 308; 508) or flaps, preferably provided as a slider (8; 308; 508) guided on the passage wall (5), which opens the number of passages (6) provided on the height section assigned to the respective fill level (F) in response to the fill level (F), preferably the fill level (F) in the flow director.

8. Construction kit according to claim 7, **characterized in that** the slider (8; 508) has at least one release window (14; 514) bounded at least on the underside by wall sections, so that with an upward movement of the slider (8; 514), passages located below the release window (14; 514) are covered by the underside wall section of the slider (8; 508).

9. Construction kit according to claim 7 or 8, **characterized in that** the slider (8; 308; 508), in order to respond to the fill level (F), preferably the fill level (F) in the flow director, is connected to the float (9; 309; 509) floating on the fill level (F).

10. Construction kit according to one of claims 7 to 9, **characterized in that** the slider (8) is guided in guides (7) attached to the passage wall (5), preferably in guides (7) attached to the passage wall (5) on the inside of the inlet pot (4; 140; 340; 440; 540; 640), so that the float (9) floats on the fill level (F) in the inlet pot (4; 140; 340; 440; 540; 640).

11. Construction kit according to one of the preceding claims, **characterized in that** the construction kit comprises a further number of outlet pots (17; 17a), each of which can be mounted on the inside to an assigned outlet opening, which are open towards the bottom, preferably via a weir or a baffle, for discharging the liquid flow guided into the tank through the outlet openings.

12. Construction kit according to one of the preceding claims, **characterized in that** a bypass line (16; 16a) is provided, which connects each of the number of inlet-side flow directors (4; 40) to an assigned one of the further number of outlet components (6; 6a), wherein the flow director (4; 40) has a bypass opening (15; 15a; 15b), to which the bypass line is connected, preferably above the working area (6) formed by the height extension of the passage arrangement (6).

13. Construction kit according to claim 12, **characterized in that** the bypass opening (15; 15a) is formed in a bypass wall section (10; 10a) of the inlet pot (4; 40) which is offset in the horizontal direction and/or vertical direction relative to the passage wall (5; 5a), wherein the bypass wall section (10; 10a) is provided with a bypass slider (12) or a bypass flap (512), which is connected to a bypass float (13; 513) such that the bypass opening (15; 15a) is only released when the fill level (F) exceeds the working area extending over the height extension of the passage arrangement (6).

14. Construction kit according to claim 12 or 13, **characterized in that** the bypass wall section (10a) points in the other tangential direction than the passage wall (5a) and the bypass line (16a) is guided with a ring-segment-shaped course along the inner wall of the tank to the bypass mouth opening (18), which is recessed in a wall section of the outlet pot (17a) facing in the tangential direction of the bypass opening (15a).

15. Hydrodynamic separator having a cylindrical tank in the form of an upright cylinder with a cylindrical side wall (1), which is penetrated by a number of radial inlet openings and a further number of radial outlet openings, **characterized by** an installed construction kit according to one of the preceding claims.

## Revendications

1. Ensemble de composants pour l'assemblage d'un séparateur hydrodynamique à partir d'une cuve cylindrique en forme de cylindre vertical avec une paroi latérale (1) cylindrique, qui est traversée par un certain nombre d'ouvertures d'arrivée radiales et par un autre nombre d'ouvertures de sortie radiales, l'ensemble de composants comprenant pour chacune des ouvertures d'arrivée un redresseur d'écoulement pour le montage sur l'intérieur sur l'ouverture d'arrivée, lequel redresseur d'écoulement dévie le liquide entrant dans la cuve à travers l'ouverture d'arrivée vers un écoulement d'entrée qui entre dans la cuve le long de la surface intérieure de la paroi latérale (1) de façon majoritairement tangente, l'ensemble de composants comprenant un dispositif d'ajustement de l'écoulement qui maintient constante la vitesse d'écoulement tangentielle de l'écoulement d'entrée qui entre dans la cuve, vers lequel le redresseur d'écoulement dévie le liquide entrant, indépendamment du débit volumique du liquide entrant ou ajuste au moins celle-ci de telle manière que les changements de la vitesse d'écoulement tangentielle de l'écoulement d'entrée qui entre dans la cuve, vers lequel le redresseur d'écoulement dévie le liquide entrant, qui surviennent en réponse à des changements du débit volumique du liquide entrant soient amortis, le dispositif d'ajustement de l'écoulement comprenant pour chacun du nombre de redresseurs d'écoulement un élément d'ajustement de l'écoulement disposé dans le trajet d'écoulement du liquide qui y entre, qui comporte une disposition de passage (6 ; 706) avec une aire de passage à travers laquelle le liquide qui entre dans la cuve à cet endroit s'écoule ou est acheminé en force, l'aire de passage s'ajustant de telle manière que l'aire de passage parcourue par l'écoulement est plus grande quand le niveau de liquide est haut que quand il est bas, **caractérisé en ce que** chaque élément d'ajustement de l'écoulement est associé à un élément de réglage de l'écoulement qui règle l'élément d'ajustement de l'écoulement en modifiant la taille et/ou la position en hauteur et/ou la forme de l'aire de passage en réponse à un changement du niveau de remplissage (F) dans le redresseur d'écoulement ou dans la cuve, et il est prévu un élément de mesure du niveau de remplissage ou un élément de mesure du niveau de remplissage pour chacun des redresseurs d'écoulement, qui acquiert le niveau de remplissage dans la cuve ou dans le redresseur d'écoulement correspondant, de telle manière que l'élément de réglage de l'écoulement associé ou le nombre d'éléments de réglage de l'écoulement puissent être ou soient actionnés en réponse à la consigne de l'élément de mesure du niveau de remplissage afin d'ajuster l'élément d'ajustement de l'écoulement associé ou tous les éléments d'ajustement de l'écoulement.

2. Ensemble de composants selon la revendication 1, **caractérisé en ce que** l'élément d'ajustement de l'écoulement est une paroi de passage (5 ; 5a ; 5b) qui présente la disposition de passage (6 ; 706) avec l'aire de passage, à travers laquelle le liquide entrant est contraint de circuler pour entrer dans la cuve, l'aire de passage parcourue par l'écoulement étant plus grande, au moins dans une plage de fonctionnement formée sur l'étendue en hauteur de la disposition de passage (6 ; 706), quand le niveau de remplissage (F) est plus haut dans le redresseur d'écoulement ou dans la cuve que quand le niveau de remplissage (F) est plus bas.

3. Ensemble de composants selon la revendication 1 ou 2, **caractérisé en ce que** l'élément de réglage de l'écoulement est conçu comme une vanne (8 ; 308 ; 508) associée à la disposition de passage (6 ; 706).

4. Ensemble de composants selon la revendication 2 ou 3, **caractérisé en ce que** chaque élément de mesure du niveau de remplissage est conçu comme un certain nombre de flotteurs (9 ; 209 ; 309 ; 509).

5. Ensemble de composants selon l'une des revendications 2 à 4, **caractérisé en ce que** la paroi de passage (5 ; 5a ; 5b) s'étend dans le sens de la hauteur et est traversée par des passages disposés à différentes hauteurs, qui sont disponibles pour créer la disposition de passage (6) à travers laquelle le liquide entrant dans la cuve à cet endroit est obligé de s'écouler, la taille et/ou le nombre des passages prévus par section de la hauteur augmentant de préférence vers le haut et chacun des passages étant de préférence circulaire.

6. Ensemble de composants selon l'une des revendications précédentes, **caractérisé en ce que** le redresseur d'écoulement est conçu comme un godet d'arrivée (4 ; 40 ; 140 ; 340 ; 440 ; 540 ; 640 ; 740) pouvant être monté sur l'intérieur sur l'ouverture d'arrivée (2), de préférence fermé sur sa face supérieure, qui présente une face orientée à peu près dans le sens tangent sur laquelle l'élément d'ajustement de l'écoulement ou la paroi de passage (5) avec la disposition de passage (6) est formée.

7. Ensemble de composants selon l'une des revendications 3 à 6, **caractérisé en ce que** l'élément de réglage de l'écoulement est conçu comme un certain nombre de vannes (8 ; 208 ; 308 ; 508) ou de clapets, de préférence comme une vanne (8 ; 308 ; 508) guidée sur la paroi de passage (5), qui dégage, en réponse au niveau de remplissage (F), de préférence au niveau de remplissage (F) dans le redresseur d'écoulement, le nombre prévu de passages (6) dans la section de la hauteur associée au niveau de remplissage (F) en question.

8. Ensemble de composants selon la revendication 7, **caractérisé en ce que** la vanne (8 ; 508) comporte au moins une fenêtre de dégagement (14 ; 514) délimitée au moins vers le bas par des parties de paroi, de sorte que les passages qui se trouvent en dessous de la fenêtre de dégagement (14 ; 514) soient couverts lors d'un mouvement ascendant de la vanne (8 ; 514) par la partie de paroi inférieure de la vanne (8 ; 508).

9. Ensemble de composants selon la revendication 7 ou 8, **caractérisé en ce que** la vanne (8 ; 308 ; 508) est reliée, pour répondre au niveau de remplissage (F), de préférence au niveau de remplissage (F) dans le redresseur d'écoulement, au flotteur (9 ; 309 ; 509) qui flotte sur le niveau de remplissage (F).

10. Ensemble de composants selon l'une des revendications 7 à 9, **caractérisé en ce que** la vanne (8) est guidée sur des guides (7) montés sur la paroi de passage (5), de préférence dans des guides (7) montés sur la face intérieure dans le godet d'arrivée (4 ; 140 ; 340 ; 440 ; 540 ; 640) sur la paroi de passage (5), de sorte que le flotteur (9) flotte sur le niveau de remplissage (F) dans le godet d'arrivée (4 ; 140 ; 340 ; 440 ; 540 ; 640).

11. Ensemble de composants selon l'une des revendications précédentes, **caractérisé en ce qu'**il comprend un autre nombre de godets de sortie (17 ; 17a) pouvant être montés sur l'intérieur, chacun sur une ouverture de sortie associée, qui sont chacun ouverts pour évacuer l'écoulement de liquide amené dans la cuve vers le bas à travers les ouvertures de sortie, en passant de préférence par un barrage ou une chicane.

12. Ensemble de composants selon l'une des revendications précédentes, **caractérisé en ce qu'**est prévue une conduite de dérivation (16 ; 16a) qui relie chacun du nombre de redresseurs d'écoulement (4 ; 40) du côté de l'arrivée à un composant associé parmi l'autre nombre de composants de sortie (6 ; 6a), le redresseur d'écoulement (4 ; 40) présentant de préférence, au-dessus de la plage de fonctionnement (6) formée par l'étendue en hauteur de la disposition de passage (6), une ouverture de dérivation (15 ; 15a ; 15b) à laquelle la conduite de dérivation est raccordée.

13. Ensemble de composants selon la revendication 12, **caractérisé en ce que** l'ouverture de dérivation (15 ; 15a) est formée dans une partie de paroi de dérivation (10 ; 10a) du godet d'arrivée (4 ; 40) décalée par rapport à la paroi de passage (5 ; 5a) dans un sens horizontal et/ou un sens vertical, laquelle partie de paroi de dérivation (10 ; 10a) est munie d'une vanne de dérivation (12) ou d'un clapet de dérivation (512) qui est relié à un flotteur de dérivation (13 ; 513) de telle manière que l'ouverture de dérivation (15 ; 15a) n'est dégagée que lorsque le niveau de remplissage (F) dépasse la plage de fonctionnement qui s'étend sur l'étendue en hauteur de la disposition de passage (6).

14. Ensemble de composants selon la revendication 12 ou 13, **caractérisé en ce que** la partie de paroi de dérivation (10a) est orientée dans l'autre direction tangentielle que la paroi de passage (5a) et la conduite de dérivation (16a) passe en forme de segment d'anneau le long de la paroi intérieure de la cuve jusqu'à l'ouverture d'embouchure de dérivation (18) qui est logée dans une partie de paroi du godet de sortie (17a) tournée vers l'ouverture de dérivation (15a) dans le sens tangent.

15. Séparateur hydrodynamique équipé d'une cuve cylindrique en forme de cylindre vertical avec une paroi latérale (1) cylindrique qui est traversée par un certain nombre d'ouvertures d'arrivée radiales et par un autre nombre d'ouvertures de sortie radiales, **caractérisé en ce qu'**il comporte un ensemble de composants intégré selon l'une des revendications précédentes.
